# EUROPEAN PATENT SPECIFICATION

(11) **EP 2 377 300 B1**
(45) Date of publication and mention of the grant of the patent: **29.04.2020**
(21) Application number: 09809075.6
(22) Date of filing: 22.12.2009
(51) Int. Cl.: H04M 1/725, H04M 3/436

(54) **CALL INTERACTION MANAGEMENT METHOD AND SYSTEM**
ANRUFINTERAKTIONS-VERWALTUNGSVERFAHREN UND SYSTEM
PROCÉDÉ ET SYSTÈME DE GESTION D'INTERACTION D'APPEL

(30) Priority: 23.12.2008 WO PCT/CN2008/002044
(43) Date of publication of application: 19.10.2011
(73) Proprietor: Orange, 75015 Paris (FR)
(72) Inventor: REN, Zhen, Beijing 100080 (CN); WU, Si, Beijing 100080 (CN); DAI, Bin, Beijing 100080 (CN)
(74) Representative: Plasseraud IP
(86) International application number: PCT/IB2009/056049
(87) International publication number: WO 2010/073237

(56) References cited:
- EP-A1- 1 365 564
- EP-A2- 1 463 348
- GB-A- 2 439 371

## Description

### Field of the Invention

The present invention relates in general to telecommunication call interaction and more specifically to the interaction of a user with a telecommunication call using one or more telecommunications services.

### Background of the Invention

As telecommunication devices are part of the every day life, call interaction plays a critical role for users, telecommunication operators and service providers. Indeed, basic call implies a caller trying to reach a callee, each one of them using a telecommunication device. At first, with landlines, the caller would dial the callee's phone number and the callee's device would ring. With mobile phones, when the caller rings the callee, the callee's device would then ring if switched on or the call would be directed toward the voice mail for example if switched off. With the enhancement of mobile operating systems and mobile applications, a number of mobile applications for interacting with a call (hereafter referred to as call interaction) have been developed. One of the first ones was the filter application like e.g. black list or white list allowing a callee to allow or bare a caller to reach him/her. More recently, some applications based on the presence or user status have appeared. Presence based applications allow the callee to advise potential callers of his/her availability. User status based applications are enhanced filters working with a plurality of parameters like the mode of the callee (e.g. office, home, busy etc...), his/her schedule, the phone number of the callee etc... allowing these different levels of filtering on each incoming call. The drawback of such a call interaction solution is that the user status and the incoming call are taken into consideration to either allow or bare said incoming call. This remains static filtering with unilateral effect.

Another existing call interaction solution allows a callee, when he/she receives an incoming call from a caller and when he/she does not want to pick up the phone, to reply to said caller using e.g. a text message or a ring back tone. However, in terms of choice of services when a call event (e.g. an incoming call, an outgoing call, a busy line etc ..) occurs, these existing solutions offer limited or inexistent interaction for the callee and are neither dynamic nor flexible especially in terms of configuration. Today no existing solution offers a complete management of various call interactions (i.e. implying different services and different call events and here after referred to as "call interaction management"). GB2439371A discloses how incoming calls can be filtered by a component in a mobile device towards particular applications using the caller line identification as the basis for differentiation. EP1463348 discloses a mobile terminal, and more particularly a method of starting an application program of a mobile terminal having a data terminating function.

Today there is a need for a call interaction management solution that can be easily implemented on the existing communication infrastructures, overcoming the drawbacks of the prior art.

### Summary of Invention

It is an object of the present system to overcome disadvantages and/or make improvement over the prior art. The present invention is defined by independent claims 1, 7 and 13 with particular embodiments being represented by the corresponding dependent claims.

One advantage of the invention resides in the dynamic configuration of call interaction management which allows launching advantageously one or a combination of service(s). A mapping table allows the user to dynamically associate call interaction conditions that launch such service(s) based on the nature of the call or call event. Call interaction rules may be defined by associating call interaction conditions that trigger, upon one or a plurality of call event(s), one or a plurality of service(s).

Indeed, as opposed to existing solutions, the present invention allows the user to launch applications not only with incoming calls, but also outgoing calls, when said user picks up the phone, when said user hang up the phone, when the line the user is calling is busy etc...

Furthermore, the method according to the present invention allows different services to be provided to the user depending on call interaction conditions. For instance, call interaction conditions may be used simultaneously or prioritized in order for the user to be offered different levels of services given by one or more applications. These services are thus triggered based on the nature of the call event and said simultaneous or prioritized call interaction conditions.

Call interactions conditions may be pre-defined and prioritized by e.g. the user or the service provider (for instance, the provider of the call interaction management unit implementing the method according to the invention) or the telecommunication operator. Moreover, the user may be able to define himself the rules stating which service(s) is/are triggered according to which call interaction condition(s) and to which call event.

Moreover, the method according to the invention may allow the user or a third party service provider to create their own applications that may be further part of services to be triggered upon call events according to rules defined by the user.

An interesting aspect of the present invention is that the user may interact with a call in different ways and at different stages of the call. Indeed, multiple choices are offered to the user based on different call events and call interaction conditions.

These improvements brought by the method according to the invention allow the user to really interact with a call and in particular to manage information associated with said call like for example:
- by setting a reminder associated with a caller to call him back later,
- by setting up a reminder associated with a callee the user is trying to reach but whose line is busy,
- by informing the user of information about information associated with the caller (e.g. a future meeting etc...)
- by informing a caller during a call establishment
- etc...

### Brief Description of the Drawings

Embodiments of the present invention will now be described solely by way of example and only with reference to the accompanying drawings, where like parts are provided with corresponding reference numerals, and in which:
Figure 1 schematically illustrates the system according to an embodiment of the present invention;
Figure 2A schematically illustrates the method according to an embodiment of the present invention;
Figure 2B schematically illustrates the method according to an embodiment of the present invention;
Figure 3 schematically illustrates an example of mapping according to an embodiment of the present invention;
Figure 4A schematically illustrates a user equipment according to an embodiment of the present invention;
Figure 4B schematically illustrates a user equipment according to an embodiment of the present invention;
Figure 5 schematically illustrates an application manager system according to an embodiment of the present invention;
Figure 6 schematically illustrates an application server system according to an embodiment of the present invention;
Figure 7 schematically illustrates the upgrade and management of the Application Manager according to an embodiment of the present invention;
Figure 8 schematically illustrates the application upgrade process according to an embodiment of the present invention;
Figure 9 schematically illustrates the installation and mapping settings of services according to an embodiment of the present invention;
Figure 10 schematically illustrates the call event monitoring according to an embodiment of the present invention;
Figure 11 schematically illustrates an example of Pre-call Information Reminder application according to an embodiment of the present invention;
Figure 12 schematically illustrates an example of Pre-call Interaction application according to an embodiment of the present invention;
Figure 13 schematically illustrates an example of Reminder Setup application according to an embodiment of the present invention.

### Description of Preferred Embodiments

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, devices etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

Unless specified otherwise, the exemplary embodiment will be described hereafter in its application to a mobile device. This illustration is in no way a limitation of the scope of the present method and system as other mobile devices, i.e. in general communication devices such as PDA (Personal Digital Assistant), laptop computers, smart phones,... may as well implement the present teachings.

In addition, it should be expressly understood that the drawings are included for illustrative purposes and do not represent the scope of the present system.

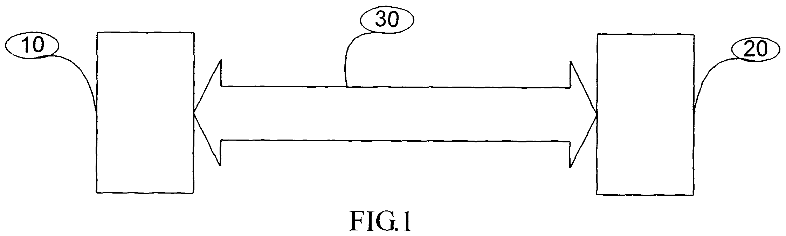

Figure 1 describes the system according to an embodiment of the present invention wherein a user equipment 10 communicates with a correspondent node 20 through a telecommunication network 30.

In the system according to the invention, the user equipment 10 is able to perform a plurality of call-related actions such as:
- picking up a call from the correspondent node 20,
- hanging up a call from the correspondent node 20,
- receiving an incoming call from the correspondent node 20,
- giving an outgoing call to the correspondent node 20,
- receiving a busy tone from the correspondent node 20,
- etc...

According to one embodiment of the present invention, the user equipment 10 may be for example a mobile phone, a smart phone, a PDA (Personal Digital Assistant), a pocket PC etc...

Such user equipments are usually equipped with applications like scheduler, notepad, word processing, chart processing, voice recorder, media player etc... that may be triggered by other applications or by the operating system when needed. For instance, a ringtone stored on a user equipment 10 may be played using a media player installed on said user equipment 10 when a correspondent node 20 is calling on the user equipment 10 through the telecommunication network 30. In this example, the phone number of the correspondent node 20 comprised in the parameters of the incoming call may be linked to the stored ringtone through previous association (i.e. through a defined rule) on the user equipment 10 with said correspondent node 20 when an incoming call is received on the user equipment 10.

In the system according to the invention, call events happen when a user equipment 10 has to deal with a call from or to a correspondent node 20. The system according to the invention allows the user via the user equipment 10 to manage this call interaction by setting himself/herself up the rules that will trigger a set of services according to a set of call interactions conditions.

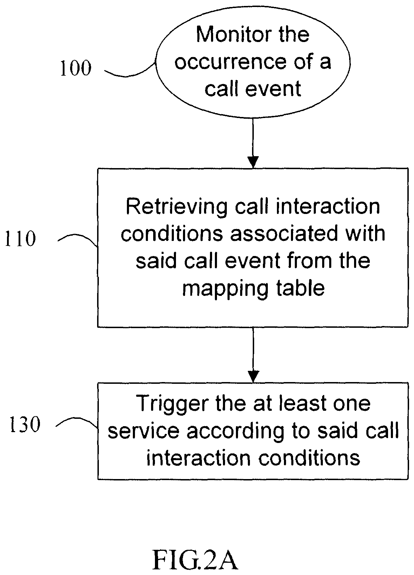

Figure 2A describes the method according to an embodiment of the present invention. References to the user equipment 10 and the correspondent node 20 are made with reference to Figure 1.

Call interaction management is operated on a call either before, during or after the call is processed by the user equipment 10. This call is associated with at least one call event which is monitored and determined in act 100. This call event may be for instance a ringing tone, picking up a call from a correspondent node 20, hanging up a call from a correspondent node 20, receiving an incoming call from a correspondent node 20, giving an outgoing call to a correspondent node 20, receiving a busy tone from a correspondent node 20, a waiting call etc...

When the call event has been monitored and determined, act 110 allows retrieving the call interaction conditions that are associated with said call even from a mapping table that will be further described. Each call event is mapped or associated with one or more call interaction conditions in a mapping table stored on the user equipment 10. When the call interaction conditions are fulfilled, one or more service(s) associated with these call interaction conditions is/are triggered in act 130.

A service comprises one or a plurality of application(s) to be triggered. When there are several applications in the same service to trigger, this may be done in sequence or simultaneously depending on the configuration of the services and the nature of the applications. An order may be defined to trigger different applications of a service according to e.g. priorities between call interaction conditions.

Call interaction conditions may be independent between them (i.e. there is no conflict between conditions) and in this case, all the services associated with these call interaction conditions may be triggered.

In the method according to the invention, call interaction conditions may be associated with call events and services through a mapping table as described here under. This mapping table may be configurable at any time by the user of the user equipment. It may as well be set-up for example by the service provider or the telecommunication operator. Similarly, the call interactions conditions may be defined by the telecommunication operator, the service provider or the user. Moreover, when needed, the prioritization of call interaction conditions may be managed or set-up by either the user, the service provider or the telecommunication operator etc...

In an exemplary embodiment illustrating the method according to the invention, the user of the user equipment 10 may configure the mapping table and the service provider or the telecommunication operator may defined and, if needed, prioritize the call interaction conditions.

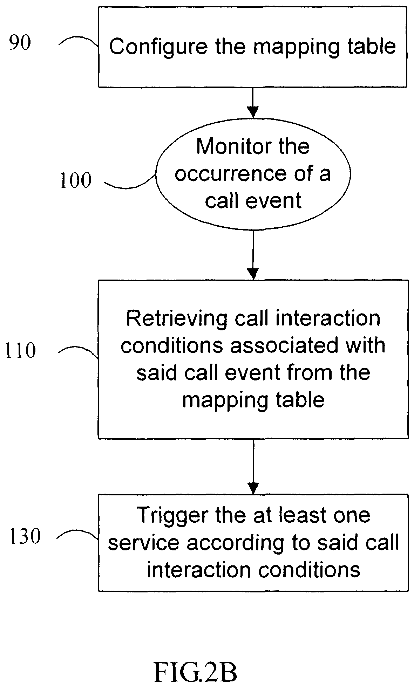

The method according to the invention may comprise a preliminary act 90, wherein the configuration or set-up of the mapping table is performed as described in Figure 2B. This configuration comprises associating (or mapping) at least one call event with at least one call interaction condition and at least one call interaction condition with at least one service to trigger.

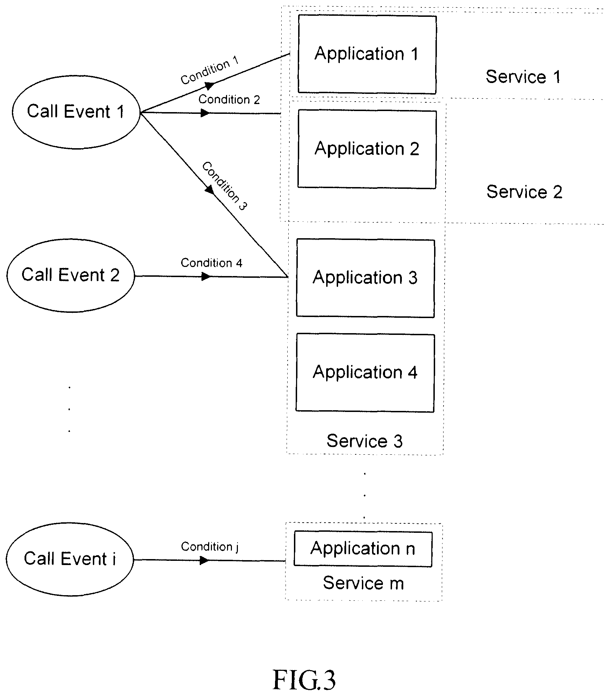

Figure 3 describes an example of mapping according to an embodiment of the present invention wherein:
- a call event 1 may trigger:
   - a service 1 comprising an application 1 upon a call interaction condition 1,
   - a service 2 comprising applications 1 and 2 upon a call interaction condition 2, and/or,
   - a service 3 comprising applications 2, 3 and 4 upon a call interaction condition 3;
- a call event 2 may trigger a service 3 comprising applications 2, 3 and 4 upon a call interaction condition 4...;
- a call event i may trigger a service m comprising application n upon a call interaction condition j.

Services and call events are linked in the mapping table through call interaction conditions. A call event may trigger several services upon different call interaction conditions. If there is no conflict between services, then several services may be triggered simultaneously or successively. However, there may be conflicts between call interaction conditions like for example if two or more call interaction conditions trigger different services which involve the same application (or several common applications) or if two or more call interaction condition trigger are associated with the same call event. In this case, call interaction conditions may be prioritized so that a higher priority call interaction condition will be used instead of a lower priority call interaction condition. And in this case, the service(s) associated with said higher priority call interaction condition may be triggered firstly and alone or may be triggered firstly then service(s) having less priority may be triggered afterwards.

Some examples of call interaction conditions may be as follows:
- an incoming call number of a correspondent node. This condition may refer to one specific phone number of a set of phone numbers. With this condition, user may define for instance to trigger different services for different (group of) correspondent nodes or different contact(s) (within a list of contacts stored on the user equipment 10);
- an out going call number. This condition may refer to one specific phone number of a set of phone numbers. With this condition, user may define to trigger different services for different (group of) contact(s);
- time: the current time where the call event takes place. With this condition, the user may trigger different services at different times.
- user status: the current status of the user when the call event takes place. The status may comprise but is not limited to for example: being at the office, at home, on vacation, in a meeting, busy, on the road, away from the user equipment.

Table 1 described examples of call events according to an embodiment of the present invention. Call events are not limited to the ones defined in Table 1 here under. The system according to the invention allows integrating, modifying or suppressing new call events if needed.

**Table 1: examples of call events**

| **No.** | **Call Event** |
|---|---|
| 1 | incoming call |
| 2 | out going call |
| 3 | pick-up phone |
| 4 | hand-up phone |
| 5 | line busy |

In the method according to the invention, call event conditions are associated with call events to trigger services. It renders this triggering dynamic: not only depending on a specific call event, but also determined by the current call event condition(s) when the call event takes place.

Table 2 described examples of call interaction conditions according to an embodiment of the present invention. As for call events, call interaction conditions may be added, modified or suppressed in the system according to the invention.

**Table 2. Call Event Conditions**

| No | Call Event Condition | Comments |
|---|---|---|
| 1 | Incoming call number(s) | The caller phone number(s) in case of incoming call. This call interaction condition condition may refer for example to one specific phone number of a set of phone numbers. With this call interaction condition, user may define to take different actions (by triggering one or a plurality of services) for different (group of) contact(s) |
| 2 | Out going call number(s) | The callee phone number in case of outgoing call. This call interaction condition may refer to one specific phone number of a set of phone numbers. With this call interaction condition, user may define to take different actions (by triggering one or a plurality of services) for different (group of) contact(s) |
| 3 | Time | The current time where the call event takes place. With this call interaction condition user may distinguish the same call event happening at different time and trigger thus different services accordingly. |
| 4 | User status | The current status of the user when the call event takes place. The status includes but is not limited to: |
| | | • at office |
| | | • at home |
| | | • in vacation |
| | | • in a meeting |
| | | • busy |
| | | • on the road |
| | | • away from the user equipment 10 |

The mapping between call events, call interaction conditions and services is a multiple-to-multiple one. The mapping is configurable and modifiable e.g. by the user. As previously described in Figure 3, one call event may correspond to several call interaction conditions (for example, call event 1 with conditions 1, 2 and 3), thus be associated with different services; one call event with one call interaction condition may be associated with one or a plurality of services; one service may be associated with several call events (service 3 associated with call events 1 and 2 for instance) and/or several call interaction conditions. As an optional exemplary feature, if, in a mapping, the call interaction condition parameter is "void", this means that this mapping applies under all call interaction conditions.

A client may be provided on the user equipment 10 to configure the mapping table and implement the method according to the invention.

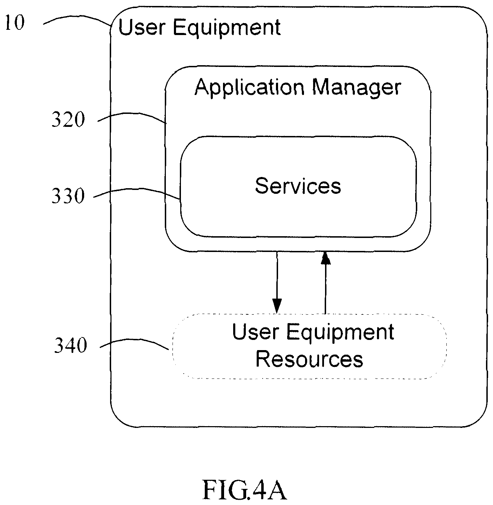

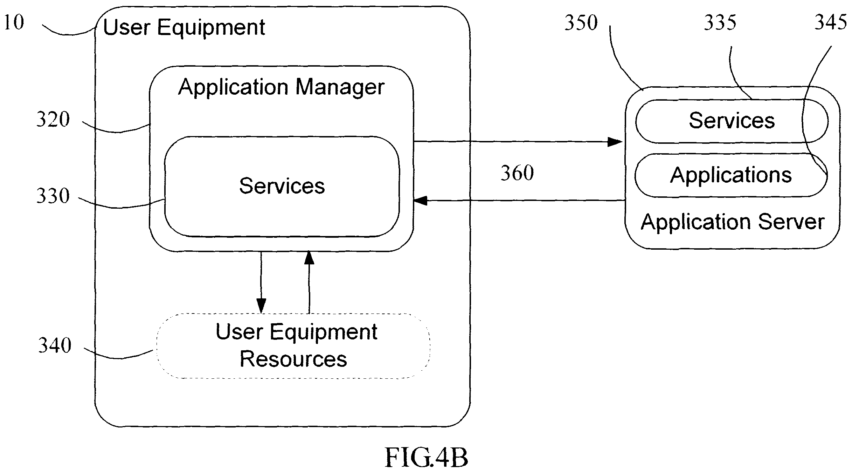

Figure 4A describes an exemplary illustration of a user equipment 10 according to an embodiment of the invention, wherein the method according to the invention is implemented by an AM (Application Manager) 320 installed therein. The AM 320 allows the management of services 330 in line with the method according to the invention. In order to manage services 330, the AM 320 may take advantage of the User Equipment Resources 340 such as e.g. the Operating System, the memory, the Central Processing Unit (CPU) and so on... The AM 320 allows also the management of the rules through the use of the telecommunication network 30 (i.e. edit and/or modify the mapping table, get update from the network when avalaible...).

As previously described, a service 330 may comprise one or a plurality of applications. These applications may either be installed and triggered directly on the user equipment 10 or, for example, on an Application Server (AS) 350 located in the telecommunication network 30. In the latter case, the user equipment 10 may send a triggering message or more generally exchange messages 360 with the Application Server 350 in order to trigger remote services 335. The application server 350 may also be used to download, update and/or create applications 345 in order to create or update new services 330 and/or 335.

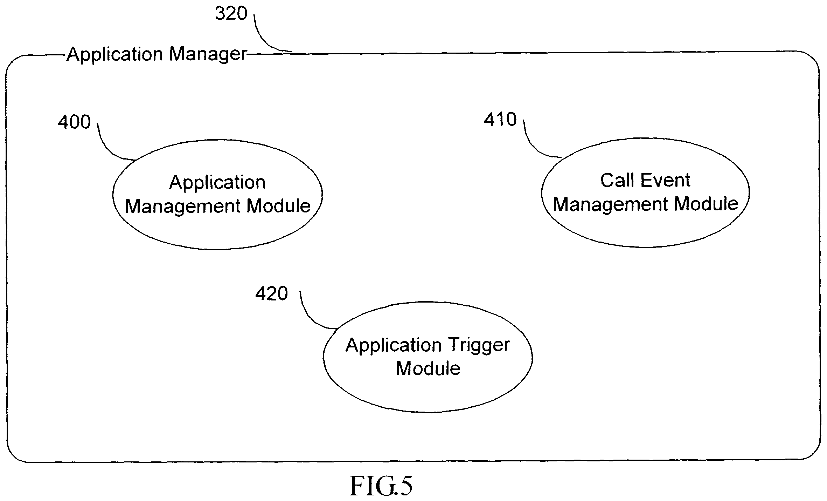

The Application Manager 320 manages the services to be triggered and the applications constituting these services. Figure 5 describes an exemplary embodiment of functions that may be performed by the Application Manager 320 such as:
- an Application Management Module (400) allowing the management of the applications and the monitoring of their status. It also communicates with the AS 350 to report its overall status, to get application upgrades or new releases;
- a Call Event Management Module (410) which provides interface for the user of the user equipment 10 to map (i.e. associate) call events and call interaction conditions with the different services (i.e. configure the Mapping Table). User may associate call event(s) and call interaction condition(s) to one or more services. One service may be associated to different call events with different conditions. This is a multiple and flexible mapping;
- an Application Trigger Module (420) for monitoring call events associated with the user equipment 10 and triggering the associated service(s) according to the Mapping Table.

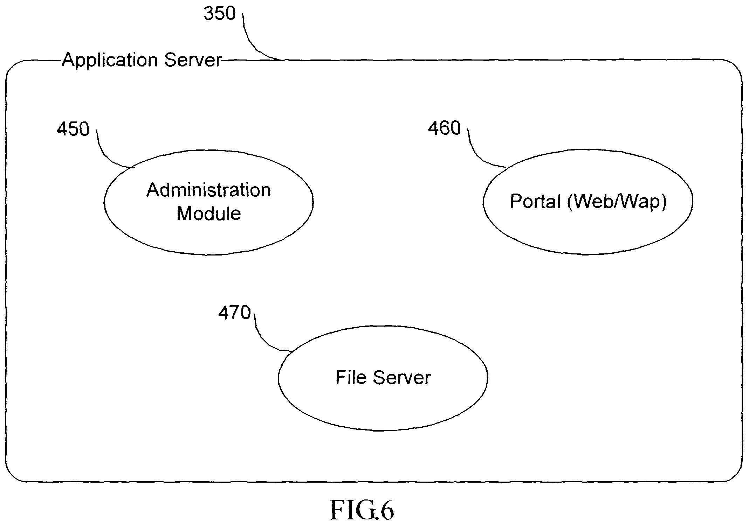

The Application Server 350 allows monitoring the status of all active Application Managers, releasing upgraded versions of existing applications and new applications. Figure 6 describes an exemplary embodiment of functions that may be performed by the AS 350 such as:
- an Administration Module (450) that provides interface for a system administrator to perform system administration tasks. Administration tasks refer to AS status monitoring and management, AM and modules status monitoring and management, new application releases and application update patch releases that may be pushed or downloaded from the network following a registration with the AS 350 as described here under;
- a Web/Wap Portal (460) for providing to a user of a user equipment 10 an interface to interact with the AS. Via this interface, the user may browse all available services and applications, performs download and upgrade of applications and AM, as well as give feedback to the AS...;
- a File Server (470) that provides file transfer services for AM download and update, as well as service and application downloads and updates.

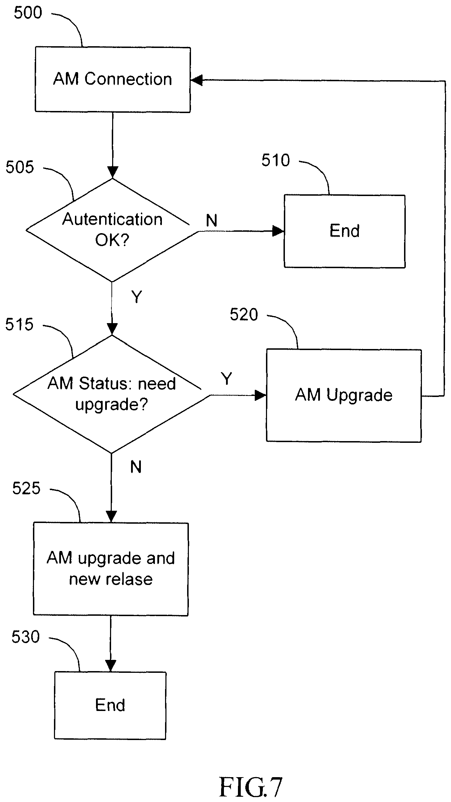

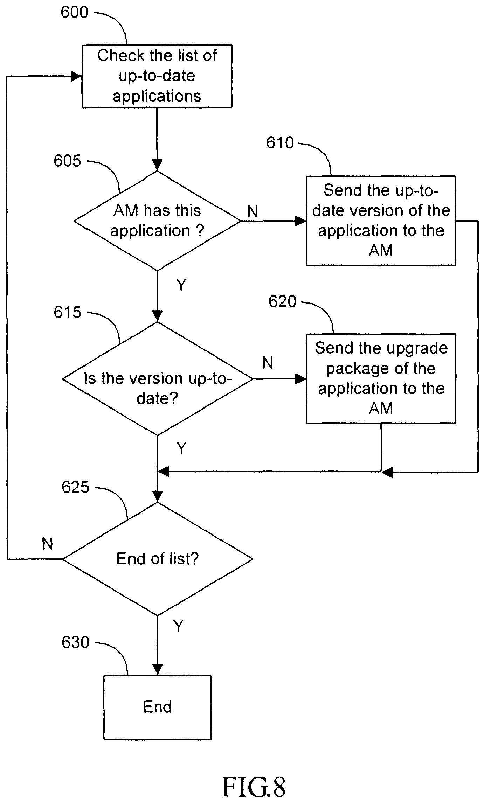

Figure 7 illustrates an example of upgrade of the Application Manager 320 by the Application Server 350 according to an embodiment of the present invention.. The AM 320 connects to the AS 350 for management and upgrade. The connection or login of the AM 320 to the AS 350 is performed in act 500. The AS 350 performs an authentication in act 505 to check if it is a legal AM that is attempting to connect. The AS 350 terminates the connection in case of illegal attempt of connection (act 510). After authentication, the AM 320 provides its status (e.g. AM version and parameter configuration) (act 515). In case of an obsolete version of the AM software, the AS 350 may provide an up-to-date version to the AM for an update (act 520). The AM 320 may re-log in after upgrade with the new version. The AS 350 then performs the upgrade process of AM applications in act 525. The act 525 is further detailed in Figure 8. When the update process is finished, the AS 350 terminates the AM management process in act 530.

Figure 8 described how the AS 350 may perform one or a plurality of application update(s) according to an embodiment of the present invention. This is a detailed explanation of the act 525 described here above in Figure 7. The AS 350 first checks for new versions of applications or new applications available for the AM 320 that connects to it. The AS 350 performs then the upgrade or new release if necessary. During the application upgrade process, the AS 350 checks the list of the up-to-date applications in an act 600 to find out for each application of the AM 320 if an update is necessary or not. For each application, it may be decided accordingly to upgrade to a new version of application if the AM 320 has an old version or release this application to the AM 320 if the latter does not have it. In act 605, the AS 350 checks for a given application if the AM 320 has this application already installed or not. If the application is not installed, the AS sends the up-to-date version of that application to the AM 320 (act 610). If the application is already installed, the AS 350 checks if it is the newest version (act 615). If not, the AS 350 sends the application upgrade package according to the current version that AM 320 has (620). The AS 350 carries out the process until the end of the list of up-to-date applications (act 625) and then terminates this process when completed (act 630).

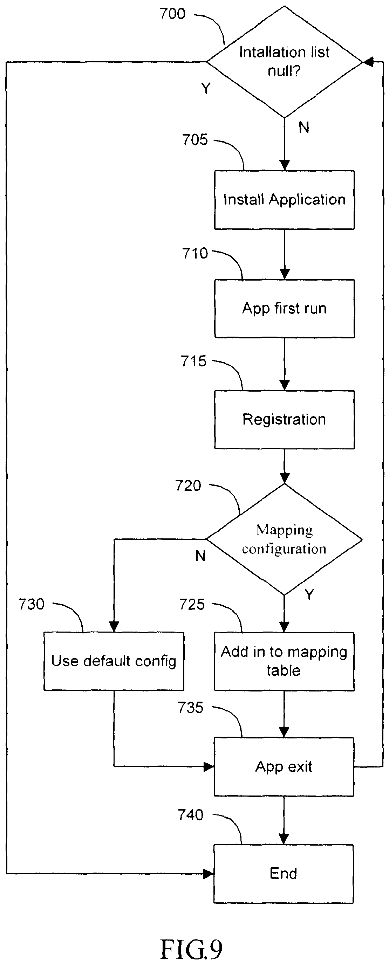

Figure 9 describes an example of application installation and registration according to an embodiment of the present invention. This process is managed by the AM 320 and happens if a new application installation is available (i.e. act 610 described in Figure 8 here above). In act 700, the AM 320 parses the list of applications to be installed (the process ends in act 740 is said list of applications is empty). Then, in act 705, the AM 320 launches the installation process for an application. In act 710, the application does the first run after its installation. In act 715, the application registers itself in the registration table further described in Table 3 here under. In act 720, the application proposes to define the call interaction condition(s) associated with this application by associating it with one or a plurality of call event(s) defining thus one or a plurality of services. The definition of the call interaction conditions may by either done manually by the user (act 725) or, otherwise, the default mapping configuration proposed by the service provider may adopted (act 730). The user may also edit and/or modify call interaction conditions proposed by the service provider or operator. The user may also create new call interaction conditions and/or erase existing ones (similarly, the user might modify or create call events). The process allows exiting from the application in act 735 and ends in act 740.

Table 3 described an example of application registration and mapping table according to an embodiment of the present invention, for a user equipment.

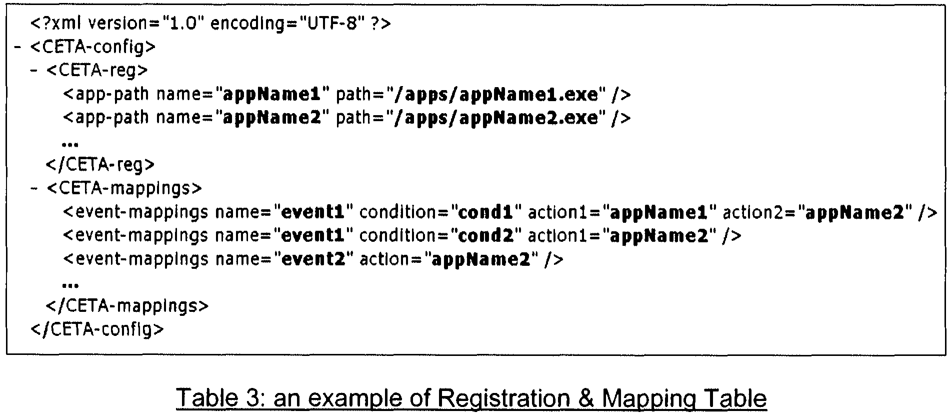

This table comprises two parts: the registration table and the mapping table. The registration table contains information about all the available applications comprised in the services installed in the system and managed by the AM 320. After the first run of each application, it will register itself into this table by providing information about its name and executable file path.

The mapping table contains configuration information about the mapping relationships between call events and services. In other words, this mapping table allows storing call events and call interaction conditions that trigger upon a call or a plurality of call event(s) one or a plurality of service(s) (i.e. allows defining call interaction rules). The mapping is a free mapping, meaning that one call event may be associated with n services (n>=0) and one service may be associated with m call events (m>=0). The user may configure this mapping table anytime he wishes by modifying the associations between call events and services or call interaction conditions via the Call Event Management Module 410 of the AM 320.

If the user decides to uninstall one application, the corresponding service might be adapted accordingly and the application will be deleted from the system as well as from these two tables by the AM 320.

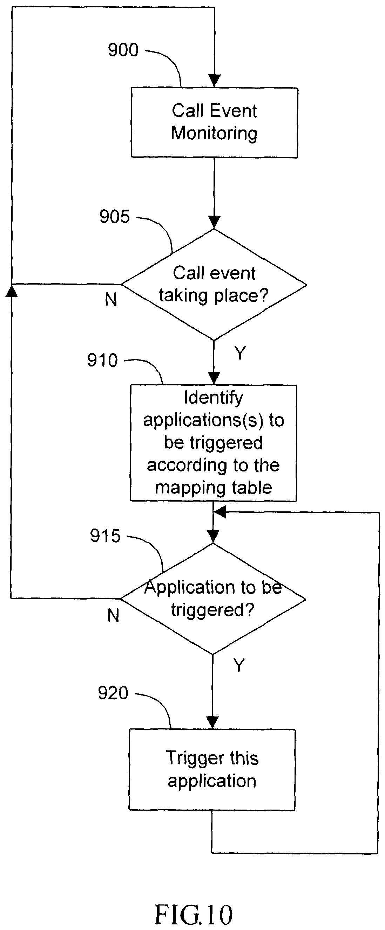

Figure 10 describes how the Application Trigger Module 420 of the AM 320 monitors call events and triggers services according to an embodiment of the present invention. Once this module has been launched, it runs periodically monitoring call events and triggering services, until it is stopped by the AM 320. In act 900, the Application Trigger Module 420 monitors or listens to all call events. In act 905, if no call event takes place, the module carries on monitoring. If any call event happens, the Application Trigger Module 420 carries out an act 910, wherein Application Trigger Module 420 identifies the service(s) associated to this call event under the call interaction condition stored in the mapping table. It then put them in the right order if there are more than one to define the whole service to be triggered. This mapping is thus dynamic with the presence of "call interaction conditions". For the same call event taking place, different service(s) may be triggered under different call interaction conditions. The Application Trigger Module 420 triggers the service (comprising one or more application(s)) identified by going through acts 915 and 920. When all the applications comprised in the service have been triggered, the Application Trigger Module 420 goes back to act 900 to restart the process circle.

In the system according to the invention, applications available through the present system may be open to third party application providers or even end users to develop their own applications. The open feature of this system may allow third party or user generated applications to enlarge its functionalities. For example, applications proposed by third parties may bring their own call interaction conditions that the user may further use (or not).

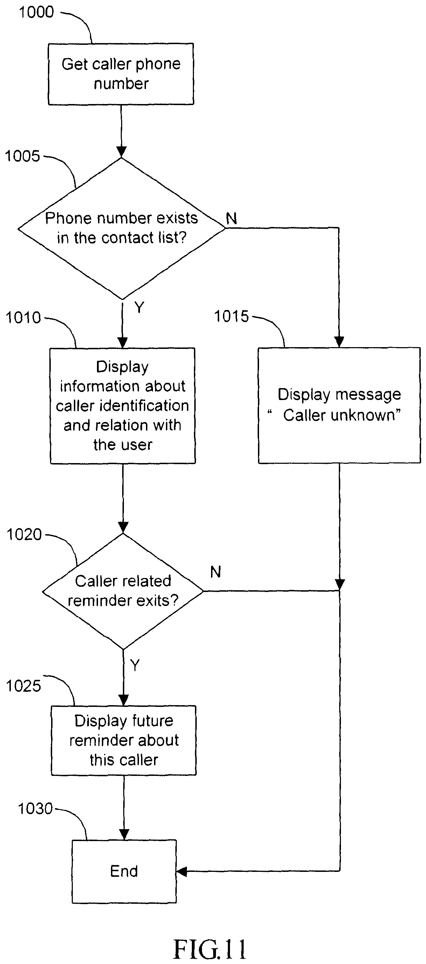

Figure 11 describes an example of service according to an embodiment of the present invention. The example relates to a Pre-call Information Reminder. It corresponds in the example described here under to one application. This service may be triggered for instance by an incoming call from a caller on the user's equipment. It identifies the caller and searches in its database the information associated with this caller, such as for instance the caller's identification information, links with the user as well as any up-to-date information (e.g. appointment). This service reminds the user about who the caller is and related issues in order for the user to choose how to deal with the incoming call. It also facilitates the communication if the user further accepts the call.

In an act 1000, the application starts by getting the telephone number or ID number associated with the incoming call. The application searches the phone's contact book to see if the calling number belongs to a known contact (act 1005). If no contact is found, the application displays a message telling the user that the incoming call is of an unknown contact (act 1015) and then terminates itself (1030). If one contact is found, the application displays information about this contact, including the contact identification as well as the links with the user (act 1010). The application goes on to search for any future reminder that has been setup about this contact (act 1020). This will help to remind the user about important issues with this contact. If any future remind has been found, the application will display these reminders (act 1025). After displaying all available information about the incoming call, the application terminates (act 1030).

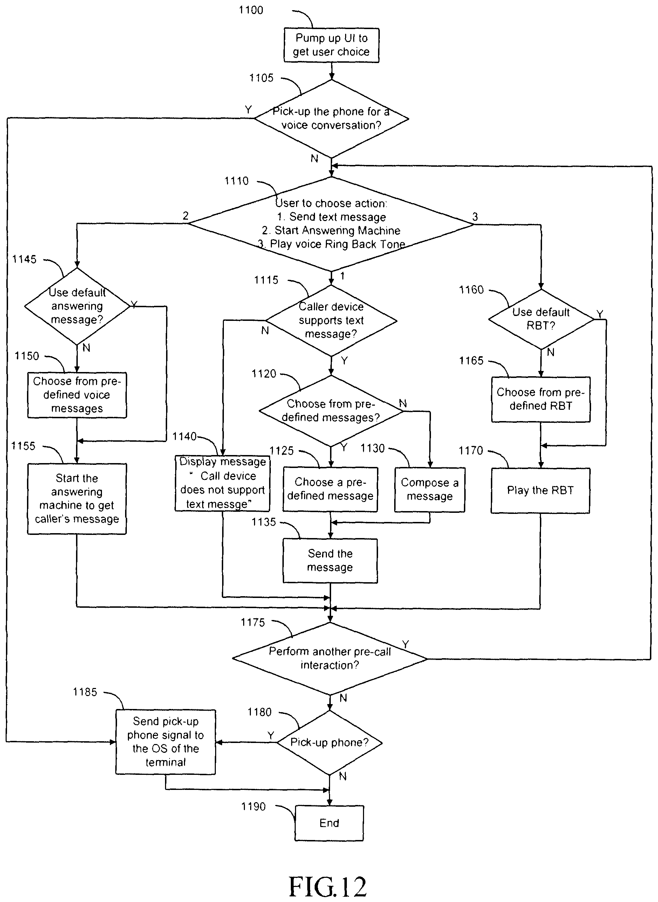

Figure 12 describes an example of service according to an embodiment of the present invention. The example relates to a Pre-call Interaction. It corresponds in the example described here under to a combination of a plurality of applications triggered in a sequence according to the choice of the user. This service may be triggered for instance by an incoming call and provides user different ways to deal with the incoming call. If the situation does not allow the user to, or if the user does not wish to answer the call instantly, he may choose, in order to inform the caller, to send a the latter a message, to play a voice Ring Back Tone (RBT) to the caller, or to run the answering machine to get a voice message. A reminder may be programmed if user wishes to remind himself to call back to the caller later.

In an act 1100, the service launches a specific User Interface to further get the user's choice. As a voice conversation often may usually have a higher priority than other choices, the service first asks the user if he wants to accept the voice conversation by picking up the phone (act 1105). If the user answers Yes, the application sends a command to the user's equipment in order to accept the incoming call (act 1185) and then terminates itself (act 1190). Based on the current situation of the user as well as the information provided by the Pre-call Information Reminder application previously described in reference to Figure 11 in case the latter is used, if the user does not wish to accept the voice conversation right away, the current application will provide him different choices (act 1110) such as for example:
- Send a text message to the caller to inform him about his status or situation and/or give other additional information
- Start the answering machine
- Play a specific Ring Back Tone to the caller.

If the user chooses to send a text message, the application will guide the user through following steps to perform this task:
a. The service will first check if the device that the caller is using supports text message functionality (act 1115),
b. If text message is not supported by the caller's device for instance, the service may display a message informing the user (act 1140) and then guide user to (act 1175),
c. In case the caller's device supports text message, the service may allow the user to decide whether he wants to choose from a pre-defined message or to compose a specific message (act 1120),
d. In act 1125, the user may choose from pre-defined text messages, e.g. "I'm in a meeting, I'll call you later",
e. In act 1130, the user may compose a text message according to the situation and the caller's identification,
f. In act 1135, the message chosen or composed by the user is sent to the caller.

If the user chooses to start the answering machine:
a. The service first asks the user if the default answering machine voice message should be used, in order to save time (act 1145). An example of the default answering machine voice message may be: "I'm not available at the moment, please leave me a message. I will call you back as soon as possible."
b. In act 1150, the user may choose from other pre-defined voice messages to replace the default message, in order to be more suitable to the situation. An example of pre-defined message may: "I'm discussing work with my team members. Please leave me a message and I'll call you back as soon as possible."
c. In act 1155, the service starts the answering machine with the voice message that the user indicated, to let the caller leaves a message.

If the user chooses to play a Ring Back Tone to the caller:
a. The service first asks the user if the default Ring Back Tone (RBT) should be used, in order to save time (act 1160). An example of default RBT voice is: "I'm not available at the moment, please call me later. Thank you", with background music.
b. In act 1165, the user may choose from other pre-defined Ring Back Tone to replace the default one, in order to be more suitable to the situation. An example of pre-defined Ring Back Tone may be: "I will be available shortly. Please hold the line. Thank you", with background music.
c. In act 1170, the service launches or activates the Ring Back Tone that the user indicated.

After the user has chosen to perform one the three examples of Pre-call Interaction described here above, the service asks him if he wishes to perform another one (act 1175). If the answer is Yes, the application guides the user to act 1110.

In case where the user has finished with the choice of Pre-call Interaction applications, the service asks the user if he wishes to pick-up the phone to have a voice conversation (act 1180). If the user chooses to do so, the service performs an act 1185, where it sends pick-up phone signal to the user's equipment in order to pick-up the call. After that, the service terminates itself (act 1190).

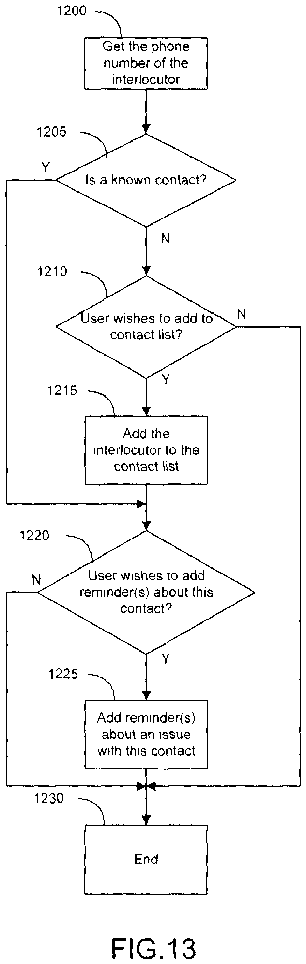

Figure 13 describes an example of service according to an embodiment of the present invention. The example relates to a Reminder Setup. It corresponds in the example described here under to one application. This service may be triggered for instance each time a phone call is terminated. It provides the user with a convenient way of storing the issues tackled during the phone call as a reminder.

In act 1200, the service gets the phone number or ID number of the interlocutor's (or correspondent node) telephone device. The service searches then the user's contact book to see if the correspondent node is a known contact (act 1205). In case this correspondent node is unknown, the service asks the user whether to add this contact to the contact book or not (act 1210). If the user does not wish so, it means that the user has no interest for this contact or does not have time to do so. In this case, the service terminates (act 1230). In act 1215, the user may add this correspondent node to his contact book. Once the correspondent node is a known contact, the service asks the user if he wishes to program reminder(s) about any issue dealt with this correspondent node during that phone call (act 1220). In act 1225, the user may program reminder(s) about the contact.

The reminder(s) will be added to the phone reminder system and will pop-up at the programmed time. The reminder(s) may also be further quoted by the Pre-call Information Reminder application described here above when it is triggered. After all operation, the service terminates in act 1230.

## Claims

1. A method of interacting with a call event for a mobile user equipment (10) comprising an application manager (320) connected to an application server (350), said method comprising the acts of:
- monitoring the occurrence of a call event,
- retrieving call interaction conditions associated with said call event from a mapping table, said mapping table defining per type of call event call interaction conditions necessary for triggering at least one service available to the mobile user equipment,
- triggering the at least one service provided that the retrieved call interaction conditions are met, wherein the at least one service comprises at least one application to be triggered, said at least one application being triggered simultaneously when the at least one service comprises several applications, and wherein the method further comprises the acts of:
checking, by the application server, for a given application among said at least one application, if said given application is installed on the application manager;
if the checked application is not installed on the application manager, sending an up-to-date version of the given application to the application manager from the application server;
if the checked application is installed on the application manager, checking if the installed application is up-to-date ;
if the installed application is not up-to-date, sending an upgrade package of the given application to the application manager from the application server.

2. A method according to claim 1, said method comprising a preliminary act of associating in the mapping table call events with call interaction conditions.

3. A method according to any of the preceding claims, said method comprising a preliminary act of associating in the mapping table call interaction conditions with at least one service.

4. A method according to any of the preceding claims, wherein the call event is any of an incoming call, an outgoing call, picking up a call, hanging up a call, busy line, a ringing tone or a waiting call.

5. A method according to any of the preceding claims, wherein the call event is associated with more than one call interaction condition.

6. A method according to claim 5, wherein the call interaction conditions are prioritized.

7. A telecommunication system for interacting with a call, said system comprising:
- an application server (350);
- a mobile user equipment (10) comprising an application manager (320) connected to the application server and operable to:
- monitor the occurrence of a call event,
- retrieve call interaction conditions associated with said call event from a mapping table, said mapping table defining per type of call event call interaction conditions necessary for triggering at least one service available to the mobile user equipment,
- trigger the at least one service provided that the retrieved call interaction conditions are met, wherein the at least one service comprises at least one application to be triggered, said at least one application being triggered simultaneously when the at least one service comprises several applications, and wherein the application server is further operable to:
- check for a given application among said at least one application if said given application is installed on the application manager;
- if the checked application is not installed on the application manager, send an up-to-date version of the given application to the application manager from an application server;
- if the checked application is installed on the application manager, check if the installed application is up-to-date;
- if the installed application is not up-to-date, sending an upgrade package of the given application to the application manager from the application server.

8. A telecommunication system according to claim 7, said mobile user equipment being further operable to associate in the mapping table call events with call interaction conditions.

9. A telecommunication system according to any of the preceding claims 7 and 8, said mobile user equipment being further operable to associate in the mapping table call interaction conditions with at least one service.

10. A telecommunication system according to any of the preceding claims 7 to 9, wherein the call event is any of an incoming call, an outgoing call, picking up a call, hanging up a call, busy line, a ringing tone or a waiting call.

11. A telecommunication system according to any of the preceding claims 7 to 10, wherein the call event is associated with more than one call interaction condition.

12. A telecommunication system according to claim 11, wherein said call interaction conditions are prioritized.

13. A computer program providing computer executable instructions stored on a computer readable medium, which when loaded on to a data processor causes the data processor to perform a method for interacting with a call according to claims 1 to 6.

## Patentansprüche

1. Verfahren zum Interagieren mit einem Anrufereignis für ein mobiles Benutzerendgerät (10), das einen Anwendungsmanager (320) umfasst, der mit einem Anwendungsserver (350) verbunden ist, wobei das Verfahren die folgenden Vorgänge umfasst:
- Überwachen auf das Auftreten eines Anrufereignisses,
- Abrufen von Anrufinteraktionsbedingungen, die mit dem Anrufereignis assoziiert sind, aus einer Mapping-Tabelle, wobei die Mapping-Tabelle pro Typ von Anrufereignis Interaktionsbedingungen definiert, die notwendig sind, um mindestens einen Dienst auszulösen, der für das mobile Benutzerendgerät verfügbar ist,
- Auslösen des mindestens einen Dienstes, sofern die Interaktionsbedingungen erfüllt sind, wobei der mindestens eine Dienst mindestens eine Anwendung auszulösen umfasst, wobei die mindestens eine Anwendung gleichzeitig auszulösen wird, wenn der mindestens eine Dienst mehrere Anwendungen umfasst, und wobei das Verfahren ferner die folgenden Vorgänge umfasst:
Prüfen durch den Anwendungsserver, für eine angegebene Anwendung unter die mindestens eine Anwendung, ob die angegebene Anwendung auf dem Anwendungsmanager installiert ist,
wenn die geprüfte Anwendung nicht auf dem Anwendungsmanager installiert ist, Senden einer aktuellen Version der angegebene Anwendung an den Anwendungsmanager von dem Anwendungsserver,
wenn die geprüfte Anwendung auf dem Anwendungsmanager installiert ist, Prüfen, ob die installierte Anwendung aktuell ist,
wenn die installierte Anwendung nicht aktuell ist, Senden eines Upgrade-Pakets der angegebene Anwendung an den Anwendungsmanager von dem Anwendungsserver.

2. Verfahren nach Anspruch 1, wobei das Verfahren einen vorbereitenden Vorgang des Assoziierens der Anrufereignisse der Mapping-Tabelle mit Anrufinteraktionsbedingungen umfasst.

3. Verfahren nach einem der vorhergehenden Ansprüche, wobei das Verfahren einen vorbereitenden Vorgang des Assoziierens der Anrufereignisse der Mapping-Tabelle mit mindestens einem Dienst umfasst.

4. Verfahren nach einem der vorhergehenden Ansprüche, wobei das Anrufereignis eines von einem eingehenden Anruf, einem ausgehenden Anruf, einer Annahme eines Anrufs, einem Beenden eines Anrufs, einer besetzten Leitung, einem Rufton oder einem wartenden Anruf ist.

5. Verfahren nach einem der vorhergehenden Ansprüche, wobei das Anrufereignis mit mehr als einer Anrufinteraktionsbedingung assoziiert ist.

6. Verfahren nach Anspruch 5, wobei die Anrufinteraktionsbedingungen priorisiert sind.

7. Telekommunikationssystem zum Interagieren mit einem Anruf, wobei das System Folgendes umfasst:
- einen Anwendungsmanager (350);
- ein mobiles Benutzerendgerät (10), das einen Anwendungsmanager (320) umfasst, der mit dem Anwendungsserver verbunden ist und zu Folgendem dient:
- Überwachen auf das Auftreten eines Anrufereignisses,
- Abrufen von Anrufinteraktionsbedingungen, die mit dem Anrufereignis assoziiert sind, aus einer Mapping-Tabelle, wobei die Mapping-Tabelle pro Typ von Anrufereignis Interaktionsbedingungen definiert, die notwendig sind, um mindestens einen Dienst auszulösen, der für das mobile Benutzerendgerät verfügbar ist,
- Auslösen des mindestens einen Dienstes, sofern die Interaktionsbedingungen erfüllt sind, wobei der mindestens eine Dienst mindestens eine Anwendung auszulösen umfasst, wobei die mindestens eine Anwendung gleichzeitig auszulösen wird, wenn der mindestens eine Dienst mehrere Anwendungen umfasst, und wobei der Anwendungsserver ferner zu Folgendem dient:
- Prüfen, für eine angegebene Anwendung unter die mindestens eine Anwendung, ob die angegebene Anwendung auf dem Anwendungsmanager installiert ist,
- wenn die geprüfte Anwendung nicht auf dem Anwendungsmanager installiert ist, Senden einer aktuellen Version der angegebene Anwendung an den Anwendungsmanager von dem Anwendungsserver,
- wenn die geprüfte Anwendung auf dem Anwendungsmanager installiert ist, Prüfen, ob die installierte Anwendung aktuell ist,
- wenn die installierte Anwendung nicht aktuell ist, Senden eines Upgrade-Pakets der angegebene Anwendung an den Anwendungsmanager von dem Anwendungsserver.

8. Telekommunikationssystem nach Anspruch 7, wobei das mobile Benutzerendgerät ferner dazu dient, in der Mapping-Tabelle Anrufereignisse mit Anrufinteraktionsbedingungen zu assoziieren.

9. Telekommunikationssystem nach einem der vorhergehenden Ansprüche 7 und 8, wobei das mobile Benutzerendgerät ferner dazu dient, in der Mapping-Tabelle Anrufereignisse mit mindestens einem Dienst zu assoziieren.

10. Telekommunikationssystem nach einem der vorhergehenden Ansprüche 7 bis 9, wobei das Anrufereignis eines von einem eingehenden Anruf, einem ausgehenden Anruf, einer Annahme eines Anrufs, einem Beenden eines Anrufs, einer besetzten Leitung, einem Rufton oder einem wartenden Anruf ist.

11. Telekommunikationssystem nach einem der vorhergehenden Ansprüche 7 bis 10, wobei das Anrufereignis mit mehr als einer Anrufinteraktionsbedingung assoziiert ist.

12. Telekommunikationssystem nach Anspruch 11, wobei die Anrufinteraktionsbedingungen priorisiert sind.

13. Computerprogramm, das computerausführbare Anweisungen bereitstellt, die auf einem computerlesbaren Medium gespeichert sind und die, wenn sie auf einen Datenprozessor geladen werden, den Datenprozessor veranlassen, ein Verfahren zum Interagieren mit einem Anruf nach den Ansprüchen 1 bis 6 durchzuführen.

## Revendications

1. Procédé d'interaction avec un événement d'appel pour un équipement utilisateur mobile (10) comprenant un gestionnaire d'applications (320) connecté à un serveur d'application (350), ledit procédé comprenant les actions de :
- surveiller l'apparition d'un événement d'appel,
- récupérer des conditions d'interaction d'appel associées audit événement d'appel depuis une table de mise en correspondance, ladite table de mise en correspondance définissant, par type d'événement d'appel, des conditions d'interaction d'appel nécessaires pour déclencher au moins un service disponible pour l'équipement utilisateur mobile,
- déclencher l'au moins un service pourvu que les conditions d'interaction d'appel récupérées soient remplies, dans lequel l'au moins un service comprend au moins une application à déclencher, ladite au moins une application étant déclenchée simultanément lorsque ledit au moins un service comprend plusieurs application, et dans lequel le procédé comprend en outre les actions de :
- vérifier, au moyen du serveur d'application, pour une application donnée parmi ladite au moins une application, si ladite application donnée est installée sur le gestionnaire d'applications ;
si l'application vérifiée n'est pas installée sur le gestionnaire d'applications, à envoyer une version la plus récente de l'application donnée au gestionnaire d'applications à partir du serveur d'application ;
si l'application vérifiée est installée sur le gestionnaire d'applications, à vérifier si l'application installée est la plus récente ;
si l'application installée n'est pas la plus récente, à envoyer un progiciel de mise à niveau de l'application donnée au gestionnaire d'applications à partir du serveur d'application.

2. Procédé selon la revendication 1, ledit procédé comprenant une action préliminaire d'association, dans la table de mise en correspondance, d'événements d'appel à des conditions d'interaction d'appel.

3. Procédé selon l'une quelconque des revendications précédentes, ledit procédé comprenant une action préliminaire d'association, dans la table de mise en correspondance, de conditions d'interaction d'appel à au moins un service.

4. Procédé selon l'une quelconque des revendications précédentes, dans lequel l'événement d'appel est l'un quelconque d'un appel entrant, d'un appel sortant, de la prise d'un appel, de la suspension d'un appel, d'une ligne occupée, d'une sonnerie ou d'un appel en attente.

5. Procédé selon l'une quelconque des revendications précédentes, dans lequel l'événement d'appel est associé à au moins deux conditions d'interaction d'appel.

6. Procédé selon la revendication 5, dans lequel les conditions d'interaction d'appel sont hiérarchisées.

7. Système de télécommunication pour interagir avec un appel, ledit système comprenant :
- un serveur d'application (350) ;
- un équipement utilisateur mobile (10) comprenant un gestionnaire d'applications (320) connecté au serveur d'application et permettant :
- de surveiller l'apparition d'un événement d'appel,
- de récupérer des conditions d'interaction d'appel associées audit événement d'appel depuis une table de mise en correspondance, ladite table de mise en correspondance définissant, par type d'événement d'appel, des conditions d'interaction d'appel nécessaires pour déclencher au moins un service disponible pour l'équipement utilisateur mobile,
- de déclencher l'au moins un service pourvu que les conditions d'interaction d'appel récupérées soient remplies, dans lequel l'au moins un service comprend au moins une application, ladite au moins une application étant déclenchée simultanément lorsque ledit au moins un service comprend plusieurs applications, et dans lequel le serveur d'application permet en outre :
- de vérifier pour une application donnée parmi ladite au moins une application si ladite application donnée est installée sur le gestionnaire d'applications ;
- si l'application vérifiée n'est pas installée sur le gestionnaire d'applications, d'envoyer une version la plus récente de l'application donnée au gestionnaire d'applications à partir d'un serveur d'application ;
- si l'application vérifiée est installée sur le gestionnaire d'applications, de vérifier si l'application installée est la plus récente ;
- si l'application installée n'est pas la plus récente, d'envoyer un progiciel de mise à niveau de l'application donnée au gestionnaire d'applications à partir du serveur d'application.

8. Système de télécommunication selon la revendication 7, ledit équipement utilisateur mobile permettant en outre d'associer, dans la table de mise en correspondance, des événements d'appel à des conditions d'interaction d'appel.

9. Système de télécommunication selon l'une quelconque des revendications précédentes 7 et 8, ledit équipement utilisateur mobile permettant en outre d'associer, dans la table de mise en correspondance, des conditions d'interaction d'appel à au moins un service.

10. Système de télécommunication selon l'une quelconque des revendications précédentes 7 à 9, dans lequel l'événement d'appel est l'un quelconque d'un appel entrant, d'un appel sortant, de la prise d'un appel, de la suspension d'un appel, d'une ligne occupée, d'une sonnerie ou d'un appel en attente.

11. Système de télécommunication selon l'une quelconque des revendications précédentes 7 à 10, dans lequel l'événement d'appel est associé à au moins deux conditions d'interaction d'appel.

12. Système de télécommunication selon la revendication 11, dans lequel lesdites conditions d'interaction d'appel sont hiérarchisées.

13. Programme d'ordinateur fournissant des instructions pouvant être exécutées par un ordinateur stockées sur un support lisible par un ordinateur qui, lorsqu'elles sont chargées sur un processeur de données, amènent le processeur de données à réaliser un procédé pour interagir avec un appel selon les revendications 1 à 6.
